# EUROPEAN PATENT SPECIFICATION

(11) **EP 4 019 210 B1**
(45) Date of publication and mention of the grant of the patent: **09.09.2026**
(21) Application number: 20217253.2
(22) Date of filing: 24.12.2020
(51) Int. Cl.: B25J 15/06, G01N 1/22, B25J 21/00

(54) **A SUCTION GRIPPER FOR AUTOMATIC MANIPULATION OF FILTERS AND A FILTER CHAMBER TO BE USED WITH THE SAID GRIPPER**
SAUGGREIFER ZUR AUTOMATISCHEN MANIPULATION VON FILTERN UND MIT DEM BESAGTEN GREIFER ZU VERWENDENDE FILTERKAMMER
PINCE D'ASPIRATION POUR LA MANIPULATION AUTOMATIQUE DE FILTRES ET CHAMBRE DE FILTRE À UTILISER AVEC LADITE PINCE

(43) Date of publication of application: 29.06.2022
(73) Proprietor: Aerosol d.o.o., 1000 Ljubljana (SI)
(72) Inventor: Rigler, Martin, 1000 Ljubljana (SI); Pilko, Viktor, 4000 Kranj (SI)
(74) Representative: Patentni Biro AF d.o.o.

(56) References cited:
- CN-A- 108 674 980
- US-A1- 2017 080 579
- US-A1- 2018 029 807
- US-A1- 2019 030 728

## Description

### Field of the invention

The present invention belongs to the field of manipulation devices, more precisely to the field of gripping heads, especially gripping heads with vacuum or magnetic holding means. The invention also belongs to the field of sampling devices and devices for analysis of air or similar samples, which are collected on filters. The present invention relates to a suction gripper for automatic manipulation of filters, a system comprising the suction gripper and a chamber for filters to be used with the said gripper and a device for analysis of air comprising the said gripper and chamber.

### Background of the invention

Aerosol characterization is essential for environmental health and climate research; hence different instruments for analysis are available in the market. These instruments can be grouped by collection media as (Baron and Willeke, 2001, ISBN: 978-0-470-38741-2; Vincent, 2007, ISBN: 978-0-470-02725-7):
- direct-reading instruments without collection on filter or substrate: particles are detected while they remain airborne using light scattering, aerosol mass spectrometry, etc.,
- direct-reading instruments with aerosol collection onto a filter or substrate: particles are continuously analysed by attenuation measurement, mechanical mass balance such as a piezoelectric or tapered element, etc.,
- aerosol samplers: when the collection of particles onto filter or substrate is required over a defined sampling period, so that the collected material can be analysed subsequently and separately (so called high and low volume samplers).

While the first two are known as online measurement techniques, the latter one is an important part of the offline aerosol measurement techniques.

The purpose of a filter in a sampling system is to efficiently collect all the particulate matter that reaches it. The filter itself consists of a porous medium that is capable of efficiently removing particles from the air (e.g. by impaction, interception, etc.) and retaining them in a form that can subsequently be analysed, either visually (under the microscope), gravimetrically (by weighing), thermal-optically or analytically (by wet chemistry or by other analytical instrumentation of the types that are currently widely available). These differing requirements provide criteria by which a particular type of filter may be chosen for a particular application.

Filters may be provided individually or in especially designed filter cassettes/holders. While individual filters for PM sampling and analysis cannot be automatically manipulated with hitherto known devices, the filter cassettes or holders can introduce filter contamination. The problem is that each filter has to be manually handled, for example first manually inserted in the cassette for sampling, after the sampling the filter has to be manually taken from the cassette and inserted into storage chamber/cell or into analysis chamber. In order to avoid contamination of the filter and consequent erroneous analysis results, the filters have to be handled in a controlled environment, which further complicates the procedure and prevents automatization of aerosol sampling and analysis.

Therefore, the technical problem solved by the present invention is construction of a suction gripper for automatic manipulation of filters that will enable handling of individual filters without special filter cassette or holders, without particularly demanding conditions and that will allow automatic manipulation. In addition, the aim of the invention is also to provide a chamber with filters, which will correspond to the said gripper and will store filters in a controlled environment before manipulation, i.e. movement with the gripper.

### State of the art

Patent application US2019061174 describes a system and methods for manipulating and sorting of objects being moved along a conveyor, whereby control of the object is achieved through the application of one or more of vacuum, impaling, or mechanical grasping. One embodiment is directed to a robotic arm and vision detection system operable for detecting a target object to be grasped from a stream of objects being moved on a conveyor, and for moving a suction head into position over the target object that has been detected on the conveyor. The suction head has a flexible cup section disposed at a distal end thereof, the vacuum item pick-up system using high subsonic air flow through a suction cup having a flow opening area for applying a desired vacuum suction force for grasping the target object. This solution is not suitable for use with fragile filters used in scientific applications such as air sampling and analysis. Furthermore, the suction head differs significantly, as no flexible cup is used in the invention.

Utility model CN203863618 relates to a handling tool for a filter fail-safe filtering element. The handling tool is characterized by comprising a handle, the lower end of the handle is connected with a sleeve, the lower end of the sleeve is connected with a clamping block, the clamping block is provided with an interior angle hole matched with a connecting bolt of the filter fail-safe filtering element, and the interior angle hole is communicated with an inner cavity of the sleeve. The construction of this handling tool differs from the present invention.

US2017080579 discloses an end effector for an articulated arm. The end effector includes a valve assembly including a plurality of supply channels, each supply channel including a supply conduit, a pressure sensor in fluid communication with the supply conduit, and a supply conduit plug. The supply conduit is in fluid communication with a vacuum source. During use, each supply conduit is either at vacuum such that the pressure within the supply conduit is substantially at a vacuum pressure, or is at a pressure that is substantially higher than vacuum pressure because the supply conduit plug has moved to block a portion of the supply conduit. The pressure sensor of each supply conduit provides a pressure sensor signal responsive to whether the pressure in the conduit is either substantially at vacuum or is at a pressure that is substantially higher than vacuum. This arrangement is not suitable for manipulation of filters for aerosol analysis, as the filters would be contaminated or damaged due to suction holes present in all parts.

US2018029807 describes a suction device including a suction portion for gripping a suction target by using a sucking force in a direction, and a pressing unit for pressing the suction target gripped by the suction portion in a direction opposite to the sucking force, and for terminating a gripped state, where the pressing unit includes a pressing member, for pressing the suction target, provided in a manner capable of advancing and retracting along the direction of the sucking force, and a drive unit for advancing and retracting the pressing member. This solution uses a combination of vacuum and electromagnet to separate the targets, which is not suitable for filters, as the filters are not responding to the magnetic field due to being non-magnetic.

US2019030728 discloses a robot hand apparatus that includes a first holder having a bendable first sucking surface that sucks an object using negative pressure; and a second holder having a bendable second sucking surface that sucks the object using negative pressure. The first holder and the second holder are arranged such that the first sucking surface opposes the second sucking surface. When the first holder and the second holder hold the object, in a state in which the first sucking surface is bent at a first position and the second sucking surface is bent at a second position, the object is sucked to a region of the first sucking surface between the first position and a distal end of the first holder, and the object is sucked to a region of the second sucking surface between the second position and a distal end of the second holder. The suction head according to this solution is made from soft rubber, which is not suitable for fragile filters, as they would bent and possibly tear.

### Description of the solution of the technical problem

The invention provides a suction gripper (i.e. a handling or gripping device) for automatic manipulation of filters especially those used in PM air sampling and analysis, as well as a chamber for filters, which can be used together with the said gripper. The invention is as set out in the appended claims.

The suction gripper for automatic manipulation of filters according to the invention comprises:
- a suction head with:
   ∘ an arm equipped with air connector for connection with a vacuum pump,
   ∘ a body having suction holes and means for separating one filter from another, wherein the holes are equally distributed on the circumference of the suction head and wherein the separating means are designed as an electromagnet to separate one filter from others, when they are separated with metal rings;
   ∘ means for connection with a suitable vacuum pump;
- a diverter valve which changes between negative pressure and overpressure at suction holes-filter junction for attachment or release of the filter;
- preferably at least one vacuum pump, optionally two pumps, for creating negative pressure and overpressure based on the status of the diverter valve, and
- optional flexible tubing for connecting the suction pump with the suction head via the diverter valve.

The vacuum pump is not necessarily provided with the gripper, but can be connected to the letter in case the gripper is installed in a device, which is already connected to a vacuum pump or has a vacuum pump installed inside the device. One pump can create negative pressure and overpressure or two pumps may be used, wherein one creates negative pressure and the other creates overpressure. The flexible tubing is arranged to connect the suction head to the vacuum pump, wherein preferably one tube connects the inlet of the pump where negative pressure is created with the suction holes on the suction head, while the other tube connects the outlet of the pump where overpressure is created to the diverter valve. This tubing has to be flexible in order to allow movement of the suction head separately from the diverter valve and the vacuum pump.

However, it is possible to design the gripper as a fixed structure, wherein the gripper itself does not move in order to move the filter, but instead the filter chamber, sampling chamber and/or analysis chambers below the gripper move in order to receive the filter.

In this embodiment the tubing is not necessary, as the vacuum pump may be connected directly to the diverter valve and to the suction head.

The dimensions and design of the suction head is customized to filter size, shape and material. Preferably, the body of the suction head is circular, rectangular or square to adapt to the shape of the filter. The design, number, size and arrangement of holes is customized to filter size and material, wherein the holes are equally distributed on the circumference of the suction head. Said holes are not present on the part of the suction head where the sampling area of the filter is located. According to the invention, suction head and suction holes are made of inert material to prevent any interference with the analysis. Suitable materials are stainless steel, aluminium alloys, technical plastic, ceramics such as Al₂O₃ or ZrO₂, each of the said materials being optionally coated with inert coatings, such as inert non-reactive silicon coating (SilcoNert^{®}) and CrN coating described here: https://www.ijs.si/ijs/dept/f3/TrdePrevleke.htm.

In order to pick only one filter means for separating one filter from another are provided on the suction head, wherein the said means are designed as an electromagnet for removal of a metal separator optionally coated with an inert coating known to the person skilled in the art to prevent contamination, the separator preferably being shaped as a ring, which is provided between two adjacent filters. Electromagnets are controlled with electric current preferably provided from the power supply of a system for manipulation or a device as described below, wherein the magnetic field disappears when the current is turned off. The two states enable easy control of the gripping and releasing the metal separator in-between filters. The said electromagnet is preferably attached to the body of the suction head via an attachment. The said magnet attracts the metal separator provided on the outer circumference of each filter, so that the sampling area of the filter is untouched.

The design of the suction head and metal ring separators define the active sampling and analysing area of the filter, i.e. the area which is not in contact with any of suction gripper parts, metal separators or gas used for suction and can be used for sampling and analysis.

The suction head is connected to the vacuum pump, wherein the pump creates suction, so that one filter can stick to the gripper and closes it from the other side. In this way no impurities can fall onto the filter during its movement. When the filter is to be released from the suction head, the diverter valve creates a short pulse of overpressure to push the filter away from the suction head. Thus, the diverter valve has to switch between suction (connections to the suction part of the vacuum pump) and blowing (overpressure outlet of the pump). The diverter valve has four connections, wherein two connections are connected to the vacuum pump, the third connection is connected to the suction head, while the fourth is freely open and has the task of air exhaust or air inlet, depending on the valve condition. The vacuum pump may be any suitable pump, preferably, if the gripper is used in an aerosol sampling device, the same suction pump used for the gripper and for the sampling chamber. The latter is possible if the pump can achieve adequate flow for sampling. The diverter valve and the vacuum pump may be arranged at a distance from the suction head and connected suitably, wherein the pump and the valve are usually stationary and only the suction head is arranged to move in order to move the filter from its original position to the required position.

The described suction gripper may be used with any filter, but preferably with filters used in aerosol studies, which:
- are made of different materials, such as quartz fibres, cellulose fibres, mixed-cellulose esters, polytetrafluoroethylene (PTFE), polycarbonate capillary pores, etc.,
- have different pore sizes,
- have any shape, usually a rectangular, square or circular shape, and
- their size is from few millimetres to few tens of centimetres, usually 47 mm and 150 mm.

The preferred embodiment of the suction gripper operates in the following way:
a) the pump is turned on and thus creates suction, which is via tubing and the diverter valve set in the first position transferred to the holes in the suction head
b) the suction head lifts the filter,
c) upon reaching a required position for releasing the filter, switching the diverter valve creates a short pulse of overpressure and thus pushes the filter to the required position,
d) while the metal separator attaches to the electromagnet to remove the metal separator from the filter,
e) the pump is turned off, and
f) upon reaching a second required position for releasing the separator, the electromagnet releases the metal separator into a deposit chamber for used separators.

The suction gripper for automatic manipulation of filters according to the invention is paired with a filter chamber to be used with the said gripper, as the two devices are interrelated, meaning that they complement each other during use in devices for air analysis, particularly in devices for detection, identification and/or quantification of aerosol particles suspended in air. Thus, a system of the gripper and the chamber is formed. Such chambers may be used entirely for filter storage or for filter storage and pre-treatment. The interrelation of the suction gripper and the chamber for filters is especially important to provide constant control over filter purity and intactness. Both the gripper and the chamber can be combined into a system for manipulation of filters, which can be installed in any suitable device that uses filters for collection and/or analysis of materials.

The said chamber for filters according to the invention comprises:
- an outer shell arranged to receive a plurality of filters, which are separated from each other with a metal separator, preferably with optional inert coating, which can be gripped with the means for separating filters forming a part of the gripper as described above, the said shell:
   ∘ having an inlet and/or outlet for delivering fresh filters and/or gripping the uppermost filter with the above described gripper, and
   ∘ being preferably insulated,
- optional pre-treatment elements, such as heaters, air inlets and outlets for conditioned filtered air or other adequate gas mixtures, which are preferably integrated in the shell, and
- integrated filter delivery system, for example a linear motor or any other device, which can move filters towards the outlet.

The shell is made of metal (for example steel or aluminium alloys) optionally coated with an inert coating, wherein its dimensions, shape and outlet/inlet depend on the size and shape of filters to be stored inside the chamber. The shell may also be insulated with suitable plastic or ceramics to ensure better thermal properties. The choice of materials depends on the pre-treatment of the filters, such as temperature, humidity as well as gas treatment, so that these conditions do not affect the chamber in a way to contaminate the stored and/or pre-treated filters. The pre-treatment elements may be used for heating, leading filtered air or gas in order to condition the filters prior to their use. For example, the pre-treatment elements enable constant flow of customized gas mixture with controlled relative humidity and temperature. In case pre-treatment elements are used, the separators separating filters have to be made of inert material resistant to temperatures and/or gases used in the pre-treatment process. In this way, the filters are not contaminated or spoiled prior to sampling. Heaters are usually located uniformly along the shell to allow uniform temperature for all filters stored inside the chamber, while air inlet and air outlet are usually positioned in opposite parts of the chamber, for example the air inlet is located in the bottom part of the chamber and the air outlet is located in the upper part of the chamber.

The suction gripper and the chamber according to the invention are preferably installed inside a device for air analysis, most preferably inside a device for sampling and analysis air intended to detect, identify and/or quantify aerosol particles suspended in air. It is particularly beneficial if the gripper and the chamber are used in a device for aerosol sampling and analysing. Such devices usually comprises housing inside which a linear guide or a robotic arm for automatically guiding the suction head of the gripper, a container for used metal separators, a chamber for storing fresh filters, a sampling chamber, an analytical chamber and a container for used filters. The suction head installed inside the device has several possible positions, one being above the chamber for storing filters in order to take the uppermost filter, a second position above the sampling chamber, a third position above the analysis chamber and two additional positions, wherein one is above the container for used metal separators and one above the container for used filters. Alternatively, instead of placing filters in the container for used analysed filters in the last step of previous description of possible application, filters can be stored in another filter storage chamber with a controlled environment, again separated with metal separators. Non-contaminated metal rings separators from the fresh filter storage chamber can be reused for this application.

The following advantages are achieved with gripper, chamber and the device according to the invention:
- expensive filter cassettes/holders are avoided,
- automatization is possible, for example by employing a robotic arm or linear motors to move the gripper;
- filter management without human interference;
- reduced possibility of filter contamination;
- analysis of filters immediately after sampling period; in contrast to conventional high or low volume sampler with automated filter changer mechanism it takes up to 14 day before all filters are collected and then transported to laboratory for analysis;
- if the filters are analysed by a non-destructive method, they can be stored in additional filter storage chamber with controlled temperature, pressure, relative humidity and mixture of storage gas for further analysis. For example, according to EN 12341:2014 filters shall be conditioned at 19 °C to 21 °C and 45% to 50% relative humidity before sampling for standard gravimetric measurement method of the determination of PM10 or PM2.5 mass concentration of suspended particulate matter.

The present invention enables further represents a bridge between offline aerosol sample collection and online filter analysis tools. Thus, this approach takes the advantages of both measurements techniques: offline sampling and online analysis. With offline sampling over defined sampling period adequate amount of collected material is achieved for accurate analysis, while online aerosol techniques avoid filter storage artefacts on one side and attain less operational costs and immediate analysis results on the other side.

The invention will be further described based on exemplary embodiments of the gripper, the chamber and the analytical device as well as figures, which show:
- Figure1: A possible construction of the filter gripper with a vacuum pump
- Figure 2: The suction head
- Figure 3: The chamber with filters and the filter gripper
- Figure 4a: The analytical device with the filter gripper and closed chambers
- Figure 4b: The analytical device with the filter gripper and open chambers

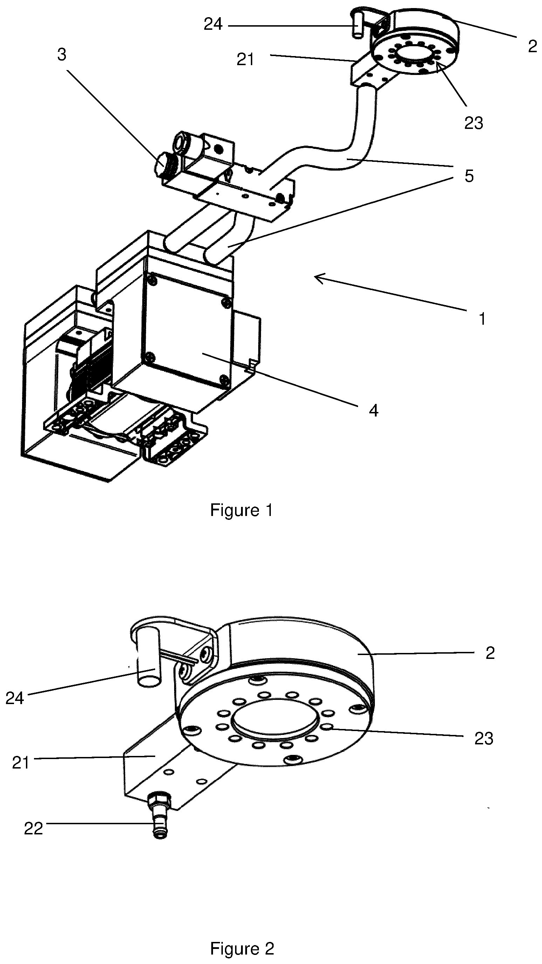

Figure 1 shows construction of a possible embodiment of the filter gripper with the vacuum pump, while figure 2 shows the suction head alone. The gripper 1 comprises:
- a suction head 2 with:
   ∘ an arm 21 equipped with air connector 22 for connection with a vacuum pump 4,
   ∘ a body 22 having suction holes 23 and means 24 for separating one filter from another, the means 24 designed as an electromagnet to separate one filter from others, when they are separated with metal rings;
- a diverter valve 3 which changes between underpressure and overpressure at suction holes-filter junction;
- a vacuum pump 4, and
- tubing 5 for connecting the suction pump 4 with the suction head 2 via the diverter valve 3.

In order to pick only one filter, the electromagnet 24 for removal of a metal separator, preferably shaped as a ring, which is provided between two adjacent filters. The electromagnet 24 is controlled with electric current, provided by a suitable power supply, which is usually the same power supply as used for the device in which the gripper is used. The said electromagnet 24 is attached to the body 22 of the suction head 2 via an attachment 22a. The said magnet 24 attracts the metal separator provided on the outer circumference of each filter, so that the sampling area of the filter remains untouched.

The suction head 2 is connected to the vacuum pump 4, wherein the pump 4 creates suction, so that one filter can stick to the gripper 1 and closes it from the other side. In this way no impurities can fall onto the filter during its movement. When the filter is to be released from the suction head 2, the diverter valve 3 creates a short pulse of overpressure to push the filter away from the suction head 2. The vacuum pump 4 may be any suitable pump.

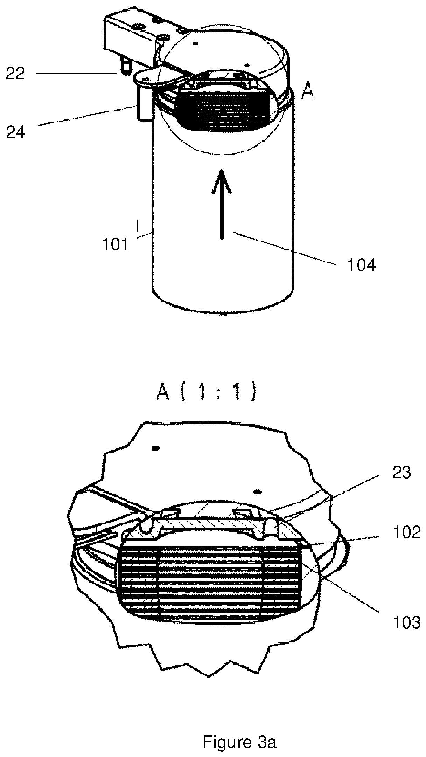

Filters are preferably stored and/or conditioned inside the filters storage chamber, in which they are separated with metal rings made of inert material or coated with an inert material, which does not contaminate the filters and is resistant to temperatures and gases used in pre-treatment process. The chamber for filters as shown in figure 3a comprises:
- an outer shell 101 arranged to receive a plurality of filters 102, which are separated from each other with a suitable separator, preferably with the metal separator 103, which can be gripped with the means 24 for separating filters forming a part of the gripper 1 as described above, the said shell:
   ∘ having an inlet and/or outlet for delivering fresh filters and/or gripping the uppermost filter with the above described gripper, and
   ∘ being preferably insulated,
- pre-treatment elements, such as heaters, air inlets and outlets for conditioned filtered air or other adequate gas mixtures, which are preferably integrated in the shell, for enabling constant flow of customized gas mixture with controlled relative humidity and temperature, and
- integrated filter delivery system, for example a linear motor or any other device, which can move filters towards the outlet (indicated by the arrow 104).

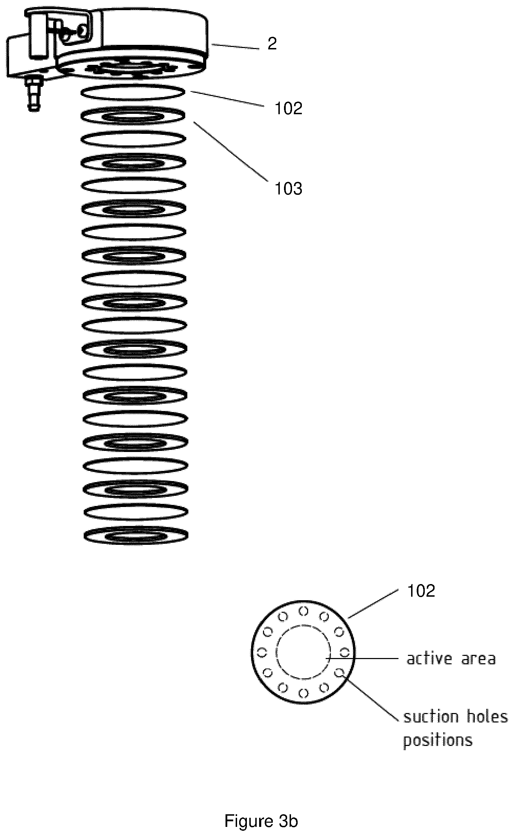

The suction head 2 as well as the shape of metal separators 103 prevent contamination of active area of the filter 102 (figure 3b).

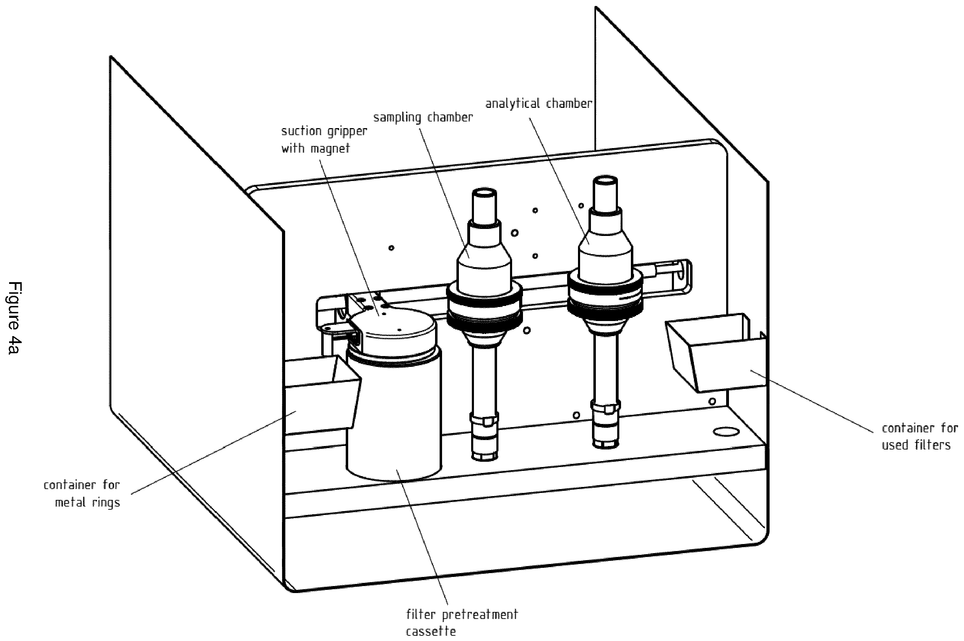

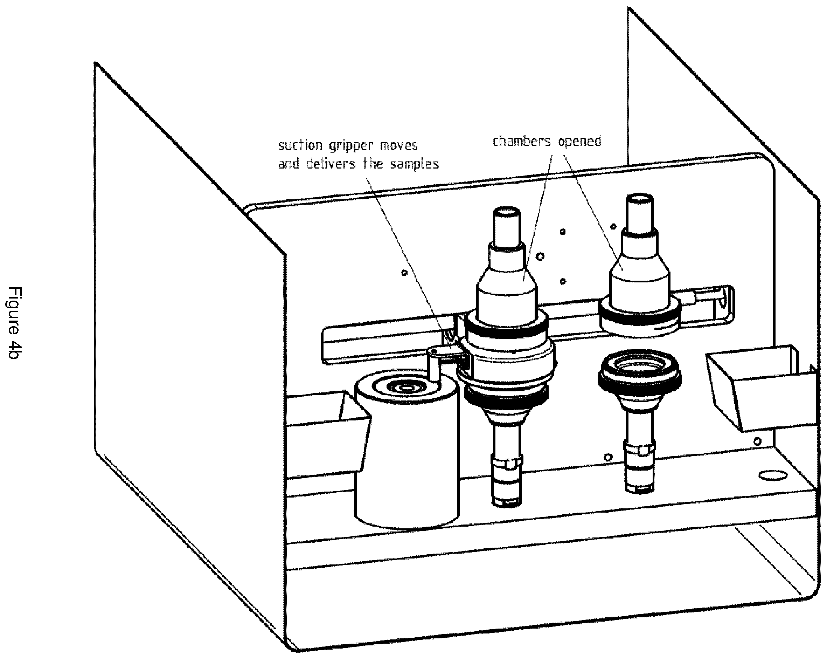

Possible use of the gripper and the chamber is with a device/system for aerosol sampling and analysing. Such exemplary device is shown in figures 4a and 4b, wherein the device comprises housing inside which a linear guide for automatically guiding the suction head of the gripper, a container for used metal separators, a chamber for storing fresh filters, a sampling chamber, an analytical chamber and a container for used filters. Before use the filters are stored in filters storage chamber at constant temperature and relative humidity. Optionally, before the first sampling the filters undergo pre-treatment process, where temperature in the chamber is increased to 400 °C, while it is flushed with nitrogen (N₂). With such pre-treatment procedure the filters are cleaned of any volatile organic compounds (VOCs).

The device using the gripper and the chamber operates in the following way:
I. Firstly, the suction head lifts the uppermost filter in the chamber by turning on the pump and creating small under pressure at suction holes-filter junction. The suction head has several possible positions, one being above the chamber for storing filters in order to take the uppermost filter and to move with the linear motor or a robotic arm to the second position above the sampling chamber, where the filter is placed (figure 4b). The sampling chamber is opened and later automatically closed. The diverter valve creates a short pulse of overpressure to push the filter into the sampling chamber, wherein the pump is turned off afterwards. Meanwhile, the electromagnet grabs the metal ring separator.
II. In the second step, the suction gripper head is moved back to the initial position above the chamber after the electromagnet drops the metal separator into the container for used metal ring separators. The sampling chamber is closed and the sampling can be initiated.
III. When sampling is finished, the sampling chamber is opened, the suction head moves over the sampling chamber to lift the filter and to move it to the opened analytical chamber in the same way as in step II.
IV. When analysis is done, the suction head is moved over the analytical chamber to lift the filter and to deposit it in the container for used filters. At the end of this step the suction gripper always introduces a fresh pre-treated filter to the sample chamber.

Alternatively, instead of placing filters in the container for used analysed filters in the last step of previous description of possible application, filters can be stored in another filter storage chamber with a controlled environment, again separated with metal ring separators. Non-contaminated metal rings separators from the fresh filter storage chamber can be reused for this application.

The above described steps may be repeated as necessary according to the analysis to be performed. Exemplary measurements are listed below:
- optical measurements: non-destructive measurement of transmission, reflection at several angles and wavelengths similar to Aethalomether or MAAP (Bernardoni et al. (2017, doi:10.3390/atmos8110218); Drinovec et al. (2015, doi:10.5194/amt-8-1965-2015); Müller et al. (2011, doi:10.5194/amt-4-245-2011));
- thermal-optical measurement of organic and elemental carbon fraction of sample content by performing thermal-optical analysis (Cavalli et al., 2010, Atmos. Meas. Tech., 79-89; Chow et al. (2004, doi:10.1021/es034936u); EN 16450:2017, 2017; Huntzicker et al., 1982, Particulate Carbon, 79-88);
- thermal measurement of Total Carbon content (Rigler et al. (2020 doi:10.5194/amt-13-4333-2020)); or
- aerosol thermal desorption - the desorbed gas is introduced to photo ionisation mass spectrometer for the molecular composition analysis of the organic vapours (Diab et al. (2015, doi:10.5194/amt-8-3337-2015)).

The suction gripper, the chamber for filters and the device for aerosol sampling and analysis may be designed in alternative ways obvious to the skilled person based on the above description. The exemplary embodiments of the invention do not limit the essence of the invention as described herein and defined in the claims.

## Claims

1. A system comprising:
- a suction gripper (1) for automatic manipulation of particulate matter (PM) air sampling and analysis filters separated with a metal separator provided on an outer circumference of each filter, wherein said filters have an active sampling and analysis area surrounded with a circumference for contacting the metal separator, wherein the analysis area is not in contact with any of suction gripper parts, metal separators or gas used for suction,
wherein said suction gripper comprises:
- a suction head (2) comprising:
∘ an arm (21) equipped with air connector (22) for connection with a vacuum pump (4),
∘ a body having suction holes (23) and separation means (24) arranged for separating one filter from another separated with the metal separator, wherein said holes (23) are evenly distributed only on the circumference of the suction head (2), and said holes (23) are not present on the part of the suction head where the sampling area of the filter is located, and wherein the separation means (24) are designed as an electromagnet attached to the body of the suction head (2) with an attachment (22a), said electromagnet (24) being controlled with an electric current arranged to affect magnetic field of the electromagnet (24);
wherein the suction head (2) and suction holes (23) are made of inert material to prevent any interference with the analysis, wherein suitable materials are stainless steel, aluminium alloys, technical plastic, ceramics such as Al₂O₃ or ZrO₂,
- a diverter valve (3) which is arranged to switch between negative pressure and overpressure at suction holes-filter junction for attachment or release of the filter, respectively;
- preferably at least one vacuum pump (4) for creating negative pressure and overpressure based on the status of the diverter valve (3), and
- optional flexible tubing (5) for connecting the vacuum pump (4) with the suction head (2) via the diverter valve (3),
- and a filter chamber comprising:
∘ an outer shell (101) arranged to receive a plurality of filters (102), which are separated from each other with a metal separator (103), preferably with optional inert coating, which can be gripped with the means (24) for separating filters forming a part of the gripper as described above, the said shell (101) having an inlet and/or outlet for delivering fresh filters and/or gripping the uppermost filter with the gripper, and
∘ an integrated filter delivery system, which can move filters towards the outlet.

2. The system according to claim 1, **characterized in that** the body of the suction head (2) is circular, rectangular or square to adapt to the shape of the filter, wherein the design, number, size and arrangement of holes (23) is customized to filter size and material.

3. The system according to any of the preceding claims, **characterized in that** the material of the suction head (2) and suction holes (23) is coated with inert coatings, such as inert non-reactive silicon coating and CrN coating.

4. The system according to any of the preceding claims, wherein the magnetic field of the electromagnet (24) is arranged to disappear when the electric current is turned off.

5. The system according to any of the preceding claims, **characterized in that** flexible tubing (5) comprises two tubes, wherein one tube connects the inlet of the pump where negative pressure is created with the suction holes on the suction head, while the other tube connects the outlet of the pump where overpressure is created to the diverter valve.

6. The system according to any of the preceding claims, **characterized in that** the diverter valve (3) has four connections, wherein two connections are connected to the vacuum pump (4), the third connection is connected to the suction head (2), while the fourth is freely open and has the task of air exhaust or air inlet, depending on the valve (3) condition.

7. The system according to any of the preceding claims, **characterized in that** the diverter valve (3) and the vacuum pump (4) are arranged at a distance from the suction head (2) and connected suitably, wherein the vacuum pump (4) and the valve (3) are usually stationary and only the suction head (2) is arranged to move in order to move the filter from its original position to a required position.

8. The system according to any of the preceding claims, **characterized in that** it is configured to operate in the following way:
- the gripper (1) has three positions in connection with the position of the filter, wherein the first, original, position is at the stack of filters to be picked up, a second position is a working position, where the picked-up filter is released, and a third position is above a storage for metal separators,
- the vacuum pump (4) upon turning on is configured to perform suction, which is transferred to the holes (23) in the suction head (2) via tubing (5) and the diverter valve (3) set in the first position, thus conferring ability to lift a filter;
- the diverter valve (3) is arranged to create a short pulse of overpressure once the filter is ready to be released to the second position,
- the electromagnet (24) is arranged to remove the metal separator from the next filter,
- upon reaching the third position for releasing the separator, the electromagnet (24) is arranged to release the metal separator into a deposit chamber for used separators.

9. The system according to any claim from 1 to 8, **characterized in that** the said filter chamber further comprises:
- an insulated outer shell (101) and
- pre-treatment elements, such as heaters, air inlets and outlets for conditioned filtered air or other adequate gas mixtures, which are preferably integrated in the shell.

10. The system according to claim 9, **characterized in that** the shell is made of metal, optionally coated with an inert coating, and optionally insulated to ensure better thermal stability, wherein dimensions, shape and outlet/inlet of the chamber depend on the size and shape of filters to be stored inside the chamber.

11. The system according to any claim from 9 to 10, **characterized in that** heaters are usually located uniformly along the shell to allow uniform temperature for all filters stored inside the chamber, while air inlet and air outlet are usually positioned in opposite parts of the chamber, for example the air inlet is located in the bottom part of the chamber and the air outlet is located in the upper part of the chamber.

12. A device for air analysis, particularly in devices for detection, identification and/or quantification of aerosol particles suspended in air comprising the system according to any of the preceding claims.

13. A device according to the preceding claim, wherein it is a device for aerosol sampling and analysing comprising housing inside which a linear guide or a robotic arm for automatically guiding the suction head of the gripper, a container for used metal separators, a chamber for storing fresh filters, a sampling chamber, an analytical chamber and a container for used filters, wherein the suction head installed inside the device has several possible positions, one being above the chamber for storing filters in order to take the uppermost filter, a second position above the sampling chamber, a third position above the analysis chamber and two additional positions, wherein one is above the container for used metal separators and one above the container for used filters.

## Patentansprüche

1. Ein System, das Folgendes umfasst:
- einen Sauggreifer (1) für die automatische Manipulation von Feinstaubluftprobenahme- und -analysefiltern, die durch einen Metallabscheider auf einem Außenumfang jedes Filters getrennt sind, wobei die Filter eine aktive Probenahme- und Analysefläche aufweisen, die von einem Umfang zum Kontaktieren des Metallabscheiders umgeben ist, wobei die Analysefläche nicht mit Teilen des Sauggreifers, den Metallabscheidern oder dem für die Ansaugung verwendeten Gas in Kontakt kommt,
wobei der Sauggreifer Folgendes umfasst:
- einen Saugkopf (2), der Folgendes umfasst:
∘ einen mit einem Luftanschluss (22) für die Verbindung mit einer Vakuumpumpe (4) ausgestatteten Arm (21),
∘ einen Körper mit Saugöffnungen (23) und Trennmitteln (24), die angeordnet sind, um einen Filter von einem anderen, durch den Metallabscheider getrennten Filter zu trennen, wobei die Öffnungen (23) gleichmäßig nur auf dem Umfang des Saugkopfes (2) verteilt sind und die Öffnungen (23) nicht auf dem Teil des Saugkopfs vorhanden sind, in dem sich die Probenahmefläche des Filters befindet, und wobei die Trennmittel (24) als Elektromagnet ausgebildet sind, der mit einer Befestigung (22a) an dem Körper des Saugkopfes (2) angebracht ist, wobei der Elektromagnet (24) mit einem elektrischen Strom gesteuert wird, der angeordnet ist, um das Magnetfeld des Elektromagneten (24) zu beeinflussen;
wobei der Saugkopf (2) und die Saugöffnungen (23) aus inertem Material bestehen, um jegliche Beeinträchtigung der Analyse zu verhindern, wobei geeignete Materialien Edelstahl, Aluminiumlegierungen, technischer Kunststoff, Keramik wie Al₂O₃ oder ZrO₂ sind,
- ein Umschaltventil (3), das angeordnet ist, um gegebenenfalls an der Verbindungsstelle zwischen Saugöffnungen und Filter zwischen Unterdruck und Überdruck für die Befestigung oder Freigabe des Filters umzuschalten;
- vorzugsweise mindestens eine Vakuumpumpe (4) zum Erzeugen von Unterdruck oder Überdruck basierend auf dem Zustand des Umschaltventils (3) und
- eine optionale flexible Schlauchleitung (5) zum Verbinden der Vakuumpumpe (4) mit dem Saugkopf (2) über das Umschaltventil (3),
- und eine Filterkammer, die Folgendes umfasst:
∘ ein Außengehäuse (101), das angeordnet ist, um mehrere Filter (102) aufzunehmen, die durch einen Metallabscheider (103), vorzugsweise mit optionaler inerter Beschichtung, voneinander getrennt sind und die mit den Mitteln (24) zum Trennen der Filter, die einen Teil des oben beschriebenen Greifers bilden, gefasst werden können, wobei das Gehäuse (101) einen Einlass und/oder Auslass zum Zuführen neuer Filter und/oder zum Greifen des obersten Filters mit dem Greifer aufweist, und
∘ ein integriertes Filterzuführsystem, das Filter in Richtung des Auslasses bewegen kann.

2. Das System nach Anspruch 1, **dadurch gekennzeichnet, dass** der Körper des Saugkopfes (2) kreisförmig, rechteckig oder quadratisch ist, um sich an die Form des Filters anzupassen, wobei Ausführung, Anzahl, Größe und Anordnung der Öffnungen (23) auf die Filtergröße und das Filtermaterial abgestimmt sind.

3. Das System nach einem der vorstehenden Ansprüche, **dadurch gekennzeichnet, dass** das Material des Saugkopfes (2) und der Saugöffnungen (23) mit inerten Beschichtungen beschichtet ist, zum Beispiel mit einer inerten, nicht reaktiven Siliziumbeschichtung und einer CrN-Beschichtung..

4. Das System nach einem der vorstehenden Ansprüche, wobei das Magnetfeld des Elektromagneten (24) angeordnet ist, um zu verschwinden, wenn der elektrische Strom abgeschaltet wird.

5. Das System nach einem der vorstehenden Ansprüche, **dadurch gekennzeichnet, dass** die flexible Schlauchleitung (5) zwei Schläuche umfasst, wobei ein Schlauch den Einlass der Pumpe, an dem Unterdruck erzeugt wird, mit den Saugöffnungen auf dem Saugkopf verbindet, während der andere Schlauch den Auslass der Pumpe, an dem Überdruck erzeugt wird, mit dem Umschaltventil verbindet.

6. Das System nach einem der vorstehenden Ansprüche, **dadurch gekennzeichnet, dass** das Umschaltventil (3) vier Anschlüsse aufweist, wobei zwei Anschlüsse mit der Vakuumpumpe (4) verbunden sind und der dritte Anschluss mit dem Saugkopf (2) verbunden ist, während der vierte frei offen ist und abhängig von dem Zustand des Ventils (3) die Aufgabe der Luftabfuhr oder Luftzufuhr übernimmt.

7. Das System nach einem der vorstehenden Ansprüche, **dadurch gekennzeichnet, dass** das Umschaltventil (3) und die Vakuumpumpe (4) in einem Abstand von dem Saugkopf (2) angeordnet und geeignet verbunden sind, wobei die Vakuumpumpe (4) und das Ventil (3) in der Regel fest sind und lediglich der Saugkopf (2) beweglich so angeordnet ist, um den Filter aus seiner ursprünglichen Position in eine gewünschte Position zu bewegen.

8. Das System nach einem der vorstehenden Ansprüche, **dadurch gekennzeichnet, dass** es konfiguriert ist, um auf folgende Weise zu arbeiten:
- Der Greifer (1) weist drei Positionen in Bezug auf die Position des Filters auf, wobei sich die erste, ursprüngliche Position an dem Stapel der aufzunehmenden Filter befindet, eine zweite Position eine Arbeitsposition ist, in der der aufgenommene Filter freigegeben wird, und sich eine dritte Position über einem Lager für Metallabscheider befindet,
- die Vakuumpumpe (4) ist konfiguriert, um nach dem Einschalten eine Ansaugung durchzuführen, die über eine Schlauchleitung (5) und das in die erste Stellung geschaltete Umschaltventil (3) auf die Öffnungen (23) im Saugkopf (2) übertragen wird, wodurch die Möglichkeit geschaffen wird, einen Filter anzuheben;
- das Umschaltventil (3) ist angeordnet, um einen kurzen Überdruckimpuls zu erzeugen, sobald der Filter bereit ist, in die zweite Position zu wechseln,
- der Elektromagnet (24) ist angeordnet, um den Metallabscheider aus dem nächsten Filter zu entfernen,
- beim Erreichen der dritten Position zum Freigeben des Abscheiders ist der Elektromagnet (24) angeordnet, um den Metallabscheider in eine Sammelkammer für gebrauchte Abscheider freizugeben.

9. Das System nach einem der Ansprüche 1 bis 8, **dadurch gekennzeichnet, dass** die Filterkammer ferner Folgendes umfasst:
- ein isoliertes Außengehäuse (101) und Vorbehandlungselemente, wie Heizelemente, Lufteinlässe und -auslässe für aufbereitete, gefilterte Luft oder andere geeignete Gasgemische, die vorzugsweise in das Gehäuse integriert sind.

10. Das System nach Anspruch 9, **dadurch gekennzeichnet, dass** das Gehäuse aus Metall gefertigt ist, optional mit einer inerten Beschichtung beschichtet ist und optional isoliert ist, um eine bessere thermische Stabilität zu gewährleisten, wobei Abmessungen, Form und Auslass/Einlass der Kammer von der Größe und Form der in der Kammer aufzunehmenden Filter abhängen.

11. Das System nach einem der Ansprüche 9 bis 10, **dadurch gekennzeichnet, dass** Heizelemente üblicherweise gleichmäßig entlang des Gehäuses angeordnet sind, um eine gleichmäßige Temperatur für alle innerhalb der Kammer gelagerten Filter zu gewährleisten, während Lufteinlass und Luftauslass üblicherweise an gegenüberliegenden Teilen der Kammer positioniert sind, beispielsweise befindet sich der Lufteinlass im unteren Teil der Kammer und der Luftauslass im oberen Teil der Kammer.

12. Eine Vorrichtung für die Luftanalyse, insbesondere in Vorrichtungen für Detektion, Identifizierung und/oder Quantifizierung von in Luft suspendierten Aerosolpartikeln, umfassend das System nach einem der vorstehenden Ansprüche.

13. Eine Vorrichtung nach dem vorstehenden Anspruch, wobei es sich um eine Vorrichtung für Aerosolprobenahme und -analyse handelt, umfassend ein Gehäuse, in dem eine Linearführung oder ein Roboterarm zum automatischen Führen des Saugkopfs des Greifers, ein Behälter für gebrauchte Metallabscheider, eine Kammer zum Lagern frischer Filter, eine Probenahmekammer, eine Analysekammer und ein Behälter für gebrauchte Filter angeordnet sind, wobei der innerhalb der Vorrichtung installierte Saugkopf mehrere mögliche Positionen aufweist: eine über der Kammer zum Lagern von Filtern zum Entnehmen des obersten Filters, eine zweite Position über der Probenahmekammer, eine dritte Position über der Analysekammer und zwei zusätzliche Positionen, von denen sich eine über dem Behälter für gebrauchte Metallabscheider und eine über dem Behälter für gebrauchte Filter befindet.

## Revendications

1. Système comprenant :
- une pince d'aspiration (1) pour la manipulation automatique de filtres d'échantillonnage et d'analyse d'air comprenant des matières particulaires (PM), séparés par un séparateur métallique pourvu sur une circonférence extérieure de chaque filtre, lesdits filtres comportant une zone d'échantillonnage et d'analyse active entourée par une zone circonférentielle destinée au contact avec le séparateur métallique, où la zone d'analyse n'est pas en contact avec les pièces de la pince d'aspiration, les séparateurs métalliques ou le gaz utilisé pour l'aspiration,
où ladite pince d'aspiration comprend :
- une tête d'aspiration (2) comportant :
∘ un bras (21) doté d'un raccord d'aspiration (22) destiné au raccordement à une pompe à vide (4),
∘ un corps comportant des orifices d'aspiration (23) et un élément de séparation (24) conçu pour séparer un filtre d'un autre, séparés par le séparateur métallique, où lesdits orifices (23) sont répartis de façon homogène uniquement sur la circonférence de la tête d'aspiration (2), et lesdits orifices (23) ne sont pas présents sur la partie de la tête d'aspiration où la zone d'échantillonnage du filtre est située, et où l'élément de séparation (24) consiste en un électro-aimant fixé sur le corps de la tête d'aspiration (2) par une fixation (22a), ledit électro-aimant (24) étant contrôlé par un courant électrique conçu pour affecter le champ magnétique de l'électro-aimant (24) ;
où la tête d'aspiration (2) et les orifices d'aspiration (23) sont composés d'un matériau inerte afin de prévenir toute interférence avec l'analyse, les matériaux appropriés étant l'acier inoxydable, les alliages à base d'aluminium, le plastique technique, les céramiques telles que Al₂O₃ ou ZrO₂,
- une vanne de commutation (3) qui est conçue pour alterner entre pression négative et surpression au niveau de la jonction orifices d'aspiration-filtre pour la fixation ou la libération du filtre, respectivement ;
- de préférence au moins une pompe à vide (4) pour la l'obtention d'une pression négative et d'une surpression en fonction du statut de la vanne de commutation (3), et
- une tubulure flexible facultative (5) pour raccorder la pompe à vide (4) et la tête d'aspiration (2) via la vanne de commutation (3),
- et une chambre à filtres comprenant :
∘ une coque externe (101) conçue pour recevoir un ensemble de filtres (102), qui sont séparés les uns des autres par un séparateur métallique (103), de préférence avec revêtement inerte facultatif, qui peut être saisi par l'élément de séparation (24) des filtres formant une partie de la pince comme décrit ci-dessus, ladite coque (101) ayant une entrée et/ou une sortie pour fournir de nouveaux filtres et/ou pour saisir le filtre supérieur avec la pince, et
∘ un système de fourniture de filtres intégré, qui peut déplacer les filtres vers la sortie.

2. Système selon la revendication 1, **caractérisé par le fait que** le corps de la tête d'aspiration (2) est circulaire, rectangulaire ou carré pour s'adapter à la forme du filtre, la conception, le nombre, la taille et la disposition des orifices (23) étant adaptés à la taille et au matériau du filtre.

3. Système selon l'une quelconque des revendications précédentes, **caractérisé par le fait que** le matériau de la tête d'aspiration (2) et des orifices d'aspiration (23) est revêtu de revêtements inertes, tels qu'un revêtement en silicium inerte et non réactif et un revêtement en CrN.

4. Système selon l'une quelconque des revendications précédentes, où le champ magnétique de l'électro-aimant (24) est conçu pour disparaître lorsque le courant électrique est coupé.

5. Système selon l'une quelconque des revendications précédentes, **caractérisé par le fait que** la tubulure flexible (5) comprend deux tubes, un des tubes raccordant l'entrée de la pompe où la pression négative est créée avec les orifices d'aspiration sur la tête d'aspiration, tandis que l'autre tube raccorde la sortie de la pompe, où la surpression est créée, à la vanne de commutation.

6. Système selon l'une quelconque des revendications précédentes, **caractérisé par le fait que** la vanne de commutation (3) a quatre raccords, deux raccords étant connectés à la pompe à vide (4), le troisième raccord étant connecté à la tête d'aspiration (2), tandis que le quatrième est ouvert et fait office d'échappement d'air ou d'entrée d'air, en fonction de la condition de la vanne (3).

7. Système selon l'une quelconque des revendications précédentes, **caractérisé par le fait que** la vanne de commutation (3) et la pompe à vide (4) sont disposées à distance de la tête d'aspiration (2) et raccordées de façon appropriée, où la pompe à vide (4) et la vanne (3) sont habituellement à l'arrêt et seule la tête d'aspiration (2) est conçue pour bouger afin de déplacer le filtre de sa position originelle vers une position requise.

8. Système selon l'une quelconque des revendications précédentes, **caractérisé par le fait qu'**il est configuré pour fonctionner de la façon suivante :
- la pince (1) a trois positions en rapport avec la position du filtre, où la première position, originelle, est au niveau de la pile de filtres devant être saisis, la seconde position est une position de travail, où le filtre saisi est libéré, et la troisième position est au-dessus d'un stock de séparateurs métalliques,
- la pompe à vide (4) lors de la mise en route est configurée pour effectuer une aspiration, qui est transférée aux orifices (23) de la tête d'aspiration (2) via les tubes (5) et la vanne de commutation (3) réglée sur la première position, conférant ainsi la capacité à soulever un filtre ;
- la vanne de commutation (3) est conçue pour engendrer une brève impulsion de surpression une fois que le filtre est prêt à être libéré vers la seconde position,
- l'électro-aimant (24) est configuré de façon à retirer le séparateur métallique du filtre suivant,
- lorsque la troisième position pour la libération du séparateur est atteinte, l'électro-aimant (24) est configuré pour libérer le séparateur métallique dans une chambre de stockage pour séparateurs usagés.

9. Système selon l'une quelconque des revendications 1 à 8, **caractérisé par le fait que** ladite chambre à filtres comprend aussi :
- une coque extérieure isolée (101) et des éléments de pré-traitement, tels que des éléments chauffants, des entrées et sorties d'air pour air filtré conditionné ou autres mélanges gazeux appropriés, qui sont de préférence intégrés à la coque.

10. Système selon la revendication 9, **caractérisé par le fait que** la coque est constituée de métal, facultativement revêtu d'un revêtement inerte, et facultativement isolé pour procurer une meilleure stabilité thermique, où les dimensions, la forme et la sortie/l'entrée de la chambre dépendent de la taille et de la forme des filtres devant être stockés dans la chambre.

11. Système selon l'une quelconque des revendications 9 à 10, **caractérisé par le fait que** les éléments chauffants sont habituellement répartis uniformément le long de la coque pour procurer une température uniforme à tous les filtres stockés dans la chambre, tandis que l'entrée d'air et la sortie d'air sont habituellement situées dans des parties opposées de la chambre, par exemple l'entrée d'air se trouve dans la partie inférieure de la chambre et la sortie d'air se trouve dans la partie supérieure de la chambre.

12. Dispositif pour l'analyse de l'air, en particulier dans des appareils destinés à la détection, l'identification et/ou la quantification des particules aérosols en suspension dans l'air, comprenant le système selon l'une quelconque des revendications précédentes.

13. Dispositif selon la revendication précédente, où celui-ci est un dispositif pour l'échantillonnage et l'analyse d'aérosols, comprenant un boîtier à l'intérieur duquel un guidage linéaire ou un bras robotisé destiné à guider automatiquement la tête d'aspiration de la pince, un compartiment pour séparateurs métalliques usagés, une chambre pour stocker les filtres neufs, une chambre d'échantillonnage, une chambre d'analyse et un compartiment pour filtres usagés, où la tête d'aspiration installée dans le dispositif a plusieurs positions possibles, l'une étant au-dessus de la chambre de stockage des filtres afin de saisir le filtre en haut de la pile, une seconde position au-dessus de la chambre d'échantillonnage, une troisième position au-dessus de la chambre d'analyse et deux positions supplémentaires, l'une étant au-dessus du compartiment pour séparateurs métalliques usagés et l'autre au-dessus du compartiment pour filtres usagés.
